# EUROPEAN PATENT APPLICATION

(11) **EP 1 173 012 A2**
(43) Date of publication of application: **16.01.2002**
(21) Application number: 01305765.8
(22) Date of filing: 04.07.2001
(51) Int. Cl.: H04N 5/445

(54) **On screen display**

(30) Priority: 13.07.2000 GB 0017159
(71) Applicant: Pace Micro Technology PLC, Saltaire, Shipley, BD18 3LF (GB)
(72) Inventor: Neville, Richard, Leeds, LS3 1AW (GB)
(74) Representative: Wood, Graham

(57) **Abstract**

A broadcast data receiver for generating an on screen display and a method of generating the display is provided. The receiver includes recording media on which received data can be stored for subsequent selective retrieval, control means for controlling the operation of the recording media and processing means for processing of the received data to generate video and/or auxiliary data for display on a display screen. The receiver further includes a means to generate a display on screen (3). The display is generated upon user selection of one of a range of operating functions of the recording media to indicate to a user that the recording media is performing a function.

## Description

The invention to which this application relates is for use particularly, although not necessarily exclusively with respect to a broadcast data receiver which is provided in a premises for the reception of data broadcast from a remote location and transmitted via any of satellite, cable or terrestrial transmission systems.

In a new form of broadcast data receivers there is provided a memory device such as a hard disk drive (HDD) upon which received data can be stored for subsequent retrieval. The broadcast data receiver, in addition to receiving the data is provided with processing means to enable the received data to be processed to generate video, audio and/or auxiliary services which are representative, in one mode of operation, as television programmes and which are displayed via a display screen such as that of a television set. The receiver can process the data upon reception or from storage in the HDD.

A problem with the storage of the data in the HDD is that upon subsequent user activation of the HDD it is difficult for the user to ascertain whether the HDD is active and, if so, what the same is doing.

The aim of the present application is to indicate to the user the activity of the memory device and thereby prevent the user from becoming concerned as to whether the apparatus is operating correctly, or at all.

In a first aspect of the invention there is provided a broadcast data receiver, said receiver including recording media on which received data can be stored for subsequent, selective retrieval, control means for controlling the operation of the recording media, processing means for the processing of the received data to generate video and/or auxiliary data for display on a display screen and wherein the receiver further includes a means to generate a display on screen, said display generated upon the user selection of one of a range of operating functions of the said recording media and to indicate to the user that the recording media is performing a function.

Typically the recording media is a hard disk drive and the display is generated on screen when any of play, record, search or other user operable functions are selected for the control means of the hard disk drive. Typically the display is generated at the time of the user selection, or a predesignated time thereafter and the display is stopped at the end of the user selected function.

The display is preferably generated on screen in a "window" so that other video or auxiliary data can still be viewed on the screen.

In one preferred embodiment, at the time of generation of the display, the time required for completion of the selected function is calculated and the display alters during the passage of the calculated time to indicate the stage at any instant with respect to the start and/or completion of the selected function.

According to a second aspect of the present invention there is provided a method of generating a display for a broadcast data receiver, said broadcast data receiver including recording media on which received data can be stored for subsequent, selective retrieval, control means for controlling the operation of the recording media, processing means for processing of the received data to generate video and/or auxiliary data for display on a display screen, and characterised in that said method includes said receiver calculating the time for completion of an operating function selected by the user using said control means, generating a display on the display screen representing, at least in part, the time for completion of said user-selected operating function and said generated display in whole or part altering in appearance during the passage of calculated time to indicate to the user the stage at any instant with respect to the start and/or completion of the selected function.

Preferably the recording media is a hard disk drive.

Preferably the on screen display is generated at the time of user selection of a function of the BDR, or a predesignated time thereafter and the display is stopped at the end of the user selected function.

Preferably the generated display includes a bar and an indicator means is provided to move in, on and/or adjacent the bar to indicate to the user the passage of time of the selected operating function.

Further preferably the movable indicator is an arrow or pointer, said arrow/pointer moving relative to the length of the bar during the passage of time of the operating function being performed.

Preferably the movable indicator is a colour interface which moves relative to the length of the bar during the passage of time of the operating function being performed, the colour interface being distinguishable from the colour of the bar.

Preferably the indicator means includes a plurality of characters or lines which become visible or invisible during the passage of time of the operating function being performed.

A specific embodiment of the invention is now described with reference to the accompanying diagram; wherein:-
Fig. 1 illustrates one example of the display which is generated in accordance with the invention.
Figure 2 illustrates a further example of the display which is generated in accordance with the invention

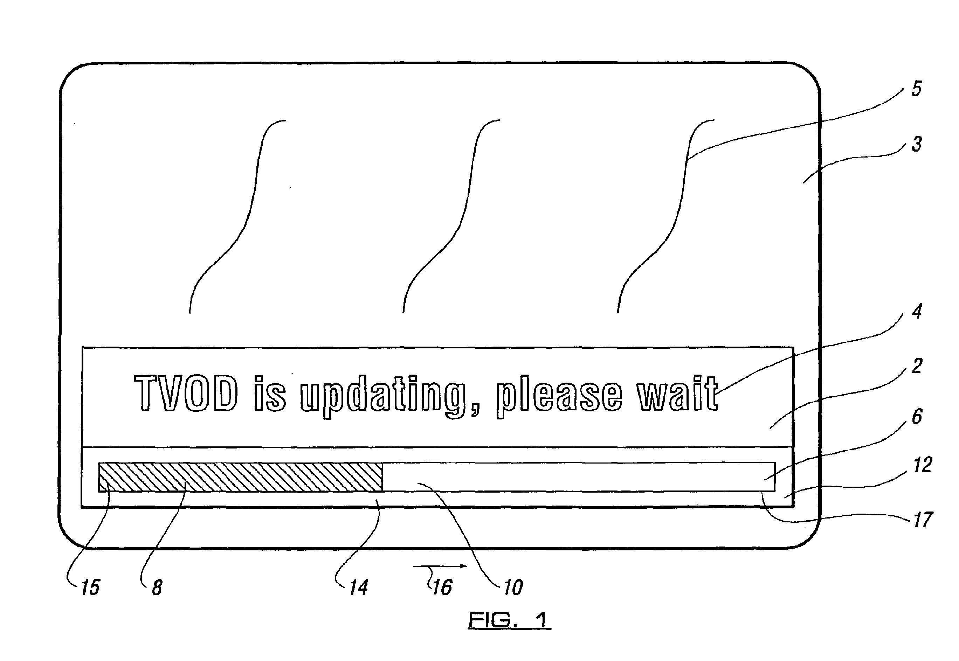

Referring to Fig. 1 there is illustrated a window display 2 of the type which can be generated on a display screen 3, partially shown, at a particular location on the display screen such as the bottom, top or wherever suited and which allows video 5 which has already been displayed on the display screen to still be at least partially viewable. The window display comprises text 4 which illustrates to the user the subject matter of the information being displayed in the window, in this case relating to a particular video service, "Television on Demand (TVOD)", and to the status of a recording medium which is part of the apparatus for generating and processing video. A bar 6 is also illustrated which has two portions 8, 10 which contrast in colour. The length of the time bar 12 illustrates the length of time for a particular operation of the hard disc drive to be completed. The respective lengths of the portions 8, 10 change during time, with the line 14, which is the interface between the portions moving as indicated by arrow 16 to illustrate the particular time taken from the start 15 and time left to the finish 17 in the overall time for completion of the function. Thus, the time bar which is generated firstly illustrates to the viewer or user of the apparatus that the hard disc drive is performing the selected function by the user and, secondly, illustrates the time which has elapsed and also the time still required for the function to be performed. The provision of the display prevents the user from believing erroneously that the apparatus is not functioning properly and furthermore, can prevent the user from contacting the service provider and complaining about the apparatus not performing properly. This is especially the case with recording media where, if the user requires a particular function to be performed which requires some time, there may be a delay in the user selecting the function and the actual function being completed.

It is envisaged that this type of display is particularly of use with regard to broadcast data receivers which includes recording media such as a hard disc drive on which video and/or audio and/or auxiliary data can be stored and from which, selected portions of said data can be retrieved by a user by selecting a particular function of operation of the control means of the hard disc drive. Thus, if the user selects to record data onto the hard disc drive then they can select the record or store function whereby a display can be generated and, for the time bar of that particular display, a calculation is performed, firstly to identify the total time for the function to be performed and thereafter the speed of movement and change in respective lengths of the portions 8, 10 along the time bar is calculated with respect to the total time required for the function and in relation to real time. Thus, the difference and movement of the portions 8, 10 will be faster along the time bar for a function which takes a relatively short period of time and slower for a function which takes a relatively longer period of time.

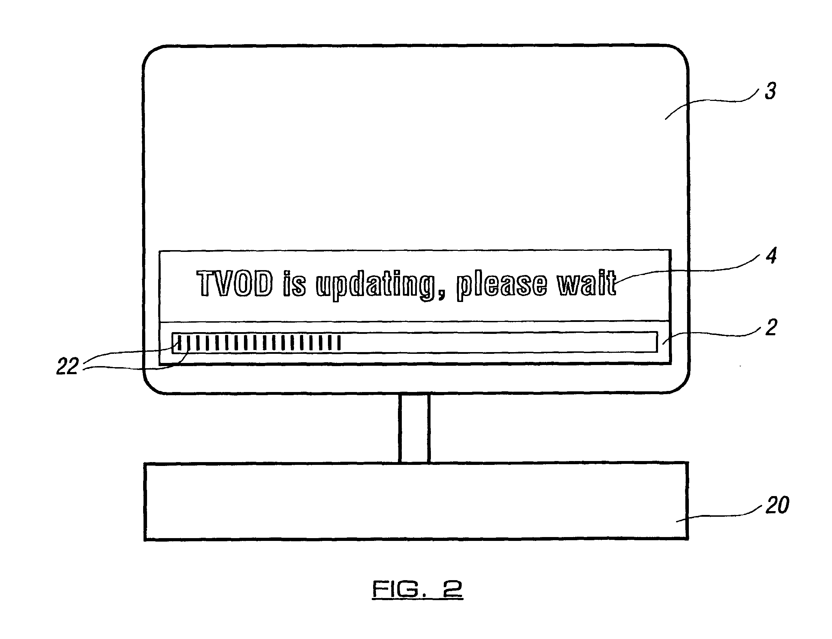

Referring to figure 2, there is illustrated a further example of the generated display for a display screen 3 connected to a broadcast data receiver 20. The generated window display 2 includes a bar 6 representing the calculated time for completion of the selected function. A plurality of lines 22 become visible along the length of the bar as the passage of time of the selected function progresses relative to the start and/or completion of the function. The plurality of lines can be replaced by a plurality of other characters and the lines/characters can become visible and/or invisible with the progression of time of the selected operating function being performed. The characters displayed also typically depend on the operating function selected by the user.

It is therefore believed that this particular embodiment of an on-screen display with regard to a hard disc drive and/or other recording media is of significant advantage to the user and also to the service provider.

## Claims

1. A broadcast data receiver, said receiver including recording media on which received data can be stored for subsequent selective retrieval, control means for controlling the operation of the recording media, processing means for processing of the received data to generate video and/or auxiliary data for display on a display screen (3) and
**characterised in that** the receiver further includes a means to generate a display on screen (3), said display generated upon the user selection of one of a range of operating functions of the recording media to indicate to a user that the recording media is performing a function.

2. A broadcast data receiver according to claim 1
**characterised in that** the recording media is a hard disk drive.

3. A broadcast data receiver according to claim 1
**characterised in that** the display is generated at the time of user selection of a receiver operating function and ends when the receiver operating function has ended.

4. A broadcast data receiver according to claim 1
**characterised in that** the display is generated a predetermined time period after user selection of a receiver operating function.

5. A broadcast data receiver according to claim 1
**characterised in that** the display is generated in a window (2) on the display screen (3).

6. A broadcast data receiver according to claim 1
**characterised in that** the generated display alters in appearance during the passage of time for which the selected operating function is being performed.

7. A broadcast data receiver according to claim 6
**characterised in that** the receiver calculates the time for completion of the selected operating function and the appearance of the generated display alters at any instant with respect to the start and/or completion of the calculated time.

8. A broadcast data receiver according to claim 1
**characterised in that** the generated display includes a bar (6) and movable indicator means is provided in, on and/or adjacent the bar (6) to indicate to the user the passage of time of the selected operating function.

9. A broadcast data receiver according to claim 8
**characterised in that** the movable indicator means is an arrow or pointer (16) that moves relative to the length of the bar (6) during the passage of time of the operating function being performed.

10. A broadcast data receiver according to claim 8
**characterised in that** the movable indicator means is a colour interface which moves relative to the length of the bar (6) during the passage of time of the operating function being performed, said colour interface distinguishable from the colour of the bar.

11. A broadcast data receiver according to claim 7
**characterised in that** the movable indicator means includes a plurality of characters or lines which become visible or invisible during the passage of time of the operating function being performed.

12. A broadcast data receiver according to claim 1
**characterised in that** a text message (4) is provided in addition to or as part of the generated display to indicate to the user that a selected operating function is being performed.

13. A broadcast data receiver according to claim 1
**characterised in that** the display is generated on screen (3) when any of play, record, search receiver functions are being performed.

14. A method of generating a display for a broadcast data receiver, said broadcast data receiver including recording media on which received data can be stored for subsequent, selective retrieval, control means for controlling the operation of the recording media, processing means for processing of the received data to generate video and/or auxiliary data for display on a display screen (3), and **characterised in that** said method includes said receiver calculating the time for completion of an operating function selected by the user using said control means, generating a display on the display screen (3) representing, at least in part, the time for completion of said user-selected operating function and said generated display in whole or part altering in appearance during the passage of calculated time to indicate to the user the stage at any instant with respect to the start and/or completion of the selected function.

15. A method according to claim 14 **characterised in that** the generated display includes a bar (6) and an indicator means is provided to move in, on and/or adjacent the bar to indicate to the user the passage of time of the selected operating function.

16. A method according to claim 15 **characterised in that** the movable indicator is an arrow or pointer (16), said arrow/pointer moving relative to the length of the bar during the passage of time of the operating function being performed.

17. A method according to claim 15 **characterised in that** the movable indicator is a colour interface which moves relative to the length of the bar (6) during the passage of time of the operating function being performed, the colour interface being distinguishable from the colour of the bar.

18. A method according to claim 15 **characterised in that** the indicator means includes a plurality of characters or lines which become visible or invisible during the passage of time of the operating function being performed.
